# EUROPÄISCHE PATENTSCHRIFT

(11) **EP 2 125 583 B1**
(45) Veröffentlichungstag und Bekanntmachung des Hinweises auf die Patenterteilung: **30.05.2012**
(21) Anmeldenummer: 07846684.4
(22) Anmeldetag: 20.11.2007
(51) Int. Cl.: B65G 43/00

(54) **FLASCHENBEHANDLUNGSANLAGE**
BOTTLE HANDLING SYSTEM
INSTALLATION DE TRAITEMENT DE BOUTEILLES

(30) Priorität: 14.12.2006 DE 102006059001
(43) Veröffentlichungstag der Anmeldung: 02.12.2009
(73) Patentinhaber: Krones AG, 93073 Neutraubling (DE)
(72) Erfinder: FINGER, Dieter, 93073 Neutraubling (DE)
(74) Vertreter: Bittner, Bernhard
(86) Internationale Anmeldenummer: PCT/EP2007/010025
(87) Internationale Veröffentlichungsnummer: WO 2008/071293

(56) Entgegenhaltungen:
- DE-A1- 2 436 591
- DE-A1- 2 507 419

## Beschreibung

Die vorliegende Erfindung bezieht sich auf ein Verfahren zur Steuerung einer Anlage zum Behandeln von Behältnissen und eine Vorrichtung zur Steuerung einer Anlage zum Behandeln von Behälthissen. Die vorliegende Erfindung wird unter Bezugnahme auf eine Anlage beschrieben, welche eine Blasmaschine bzw. Blaseinrichtung für Kunststcfflaschen aufweist und eine dieser nachgeordnete Füllanlage zum Befüllen der Behältnisse. Es wird jedoch darauf hingewiesen, dass die vorliegende Erfindung auch auf andere Anlagen mit anderen Behandlungseinheiten für Behältnisse angewandt werden kann.

Derartige Anlagen, welche eine Blasmaschine für Behältnisse und eine dieser nachgeordneten Befüllmaschine für die Behältnisse aufweisen, sind aus dem Stand der Technik bekannt. Dabei ist es aus dem Stand der Technik auch bekannt, diese beiden Behandlungseinheiten kinematisch miteinander zu koppeln, das heißt in diesem Falle wirkt sich jede Geschwindigkeitsänderung bei einer Maschine automatisch auch als Geschwirdigkeitsänderung der anderen Maschine aus. Derartige Anlagen sind Gegenstand der vorliegenden Erfindung und werden im Weiteren auch als Blockanlagen bezeichnet. Weiterhin ist es bekannt, die unterschiedlichen Sehandlungseinheiten bei derartiger. Anlagen kinematisch voneinander zu trennen, das heißt, beispielsweise unterschiedliche Arbeitsgeschwindigkeiten der beiden Sehandlungseinheiten zuzulassen oder auch eine Änderung der Arbeitsgeschwindigkeit der einen Einheit unter Beibeihaltung der Arbeitsgeschwindigkeit der anderen Einheit.

Um derartige Geschwindigkeitsunterschiede zu bewältigen, sind aus dem Stand der Technik diverse Vorrichtungen bekannt. So ist es beispielsweise aus der FR 2. 333 613 bekannt, zwischen den beiden Behandlungseinheiten ein Förderband für die Behältnisse vorzusehen, welches in seiner Länge variabel ist und damit als Puffer für die Behältnisse dient. Auch aus der US 2,932,376 ist eine automatische Transfereinheit bekannt, die ebenfalls zur Pufferung von unterschiedlichen Arbeitsgeschwindigkeiten zweier zu verbindender Maschinen dient. Aus der DE 33 10 248 C2 ist ebenfalls eine Transport- und Umleitvorrichtung in einer Flaschenbehandlungsanlage bekannt, wobei auch hier die beiden zu verbindenden Maschinen antriebsmäßig voneinander trennbar sind.

Diese antriebsmäßige Trennung führt jedoch dazu, dass einerseits die verschiedenen Behandlungseinheiten mit einem gewissen räumlichen Abstand unter Einbringurg einer Puffereinrichtung für Behältnisse voneinander aufgestellt werden müssen, um zu vermeiden, dass beispielsweise ein kurzzeitiger Stillstand der Maschine nicht auf die übrigen Maschinen der Anlage wirkt. Daneben bringen jedoch diese Puffereinrichtungen zwischen den Einheiten selbst weitere Störanfälligkeiten mit sich und bei einem Ausfall der Puffereinrichtung muss gegebenenfalls die gesamte Anlage angehalten werden. Die DE 24 36 591 beschreibt daher eine Flaschenbehandlungsanlage, bei der beide Maschinen sowie eine zwischen diesen angeordnete Überführungsvorrichtung asynchron betätigt werden.

Beim Betrieb der oben beschriebenen Anlage tritt jedoch das Problem auf, dass einzelne Behandlungseinheiten vorzugsweise unter bestimmten Bedingungen mit unterschiedlichen Arbeitsgeschwindigkeiten zu betreiben sind wo hingegen andere Behandlungseinheiten in der selben Anlage stets im Wesentlichen der gleichen Arbeitsgeschwindigkeit betrieben werden sollen. So ist es beispielsweise für eine Blasmaschine erforderlich, dass diese stets mit der gleichen Arbeitsgeschwindigkeit betrieben wird, da die Zeiträume, während derer beispielsweise die Behältnisse durch einen Ofen geführt werden, genau festgelegt sind. Auch müssen die Behältnisse in einem genau definierten zeitlichen Abstand nach dem Beheizungsvorgang geblasen werden.

Bei anderen Maschinen ist es jedoch erforderlich, dass diese zumindest zeitweise mit unterschiedlichen Geschwindigkeiten betrieben werden. So tritt beispielsweise das Problem auf, dass eine Flaschenfüllmaschine im Falle eines Produktwechsels mit langsamer Geschwindigkeit anfahren muß, damit das am Anfang zu warme Produkt nicht überschäumt. Auch können üblicherweise die letzten Behältnisse bzw. Flaschen nicht mit der vollen Leistung bzw. Arbeitsgeschwindigkeit abgefüllt werden, da das Niveau des abzufüllenden Produkts im Speicher(Ring)kessel und damit die Fließgeschwindigkeit des Produktes sinkt.

Auch die DE 25 07 419 A1 offenbart eine derartige Flaschenbehandlungsanlage mit zwei hintereinander geschalteten Flaschenbehandlungsmaschinen, welche durch mindestens einen Motor wahlweise synchron oder auch unabhängig voneinander antreibbar sind. Förderelemente zwischen diesen Flaschenbehandlungsmaschinen überführen die Flaschen von einer Maschine zur anderen, wobei ein Teil der Förderelemente mit der ersten Maschine und der andere Teil mit der zweiten Maschine antriebsmäßig verbunden sind.

Im Einlauf der ersten Maschine ist eine Flaschensperre angeordnet, so dass ein unabhängiger Lauf der ersten Maschine bei geöffneter Flaschensperre gesperrt und bei geschlossener Flaschensperre freigegeben wird. Jedoch ermöglich diese Flaschenbehandlungsanlage dennoch nicht, dass beispielsweise nach einem ersten Zeitpunkt zu einem zweiten Zeitpunkt die Flaschen mit einer erhöhten Arbeitsgeschwindigkeit als beispielsweise zu dem ersten Zeitpunkt in der zweiten Behandlungsmaschine bearbeitet werden.

Da jedoch die Blasmaschine, wie erwähnt, ihre Geschwindigkeit nicht bzw. nur sehr eingeschränkt regeln kann, wäre es denkbar, zwei Arbeitsrezepte für den Blas-Füll-Block zur Verfügung zu stellen. Eines als Arbeitsrezept für das Anfahren und Leerfahren des Blocks und ein zweites Arbeitsrezept für den Normalbetrieb. Mit dem ersten Rezept läuft der Block langsamer, um der Schaumbildung bei der Abfüllung entgegenzuwirken, mit dem zweiten Rezept ist eine Betriebsweise in Normalgeschwindigkeit möglich. Allerdings müssen in diesem Fall diese beiden Rezepte für die Betätigung des Blocks immer auf dem gleichen Stand gehalten werden. Das heißt, dass während bestimmter Anpassungen des Bedieners, die sich beispielsweise auf das erste Rezept auswirken, parallel dazu immer das zweite Rezept angepasst werden muss, da sonst bei der Umstellung des Rezepts 1 auf das Rezept 2 der gewünschte Effekt abgeschwächt wird, oder ausbleibt. Daraus ergibt sich ein nicht unerheblicher Wartungsaufwand der Rezepte. Diese Variante kann aber durchaus bei Anwendungen sinnvoll sein, bei denen beispielsweise nur mittlere Anforderungen an die Flaschengualität gestellt werden, bei denen also ein Rezept nur relativ selten angepasst wird, denn dort braucht dann auch das zweite Rezept nicht häufig angepasst zu werden.

Der vorliegenden Erfindung liegt daher die Aufgabe zugrunde, bei einer Anlage mit kinematisch starr miteinander gekoppelten Behandlungseinheiten Geschwindigkeitsänderungen einer Einheit zuzulassen, wohingegen die Arbeitsgeschwindigkeit der anderen Einheit beibehalten werden kann, um eine im wesentlichen identische Behandlung aller Behältnisse eines Typus in der Anlage zu ermöglichen.

Dies wird erfindungsgemäß durch Verfahren nach den Ansprüchen 1 und eine Anlage nach Anspruch 5 erreicht. Vorteilhafte Ausführungsformen und Weiterbildungen sind Gegenstand der Unteransprüche. Die Reduzierung der Arbeitsgeschwindigkeit dafür kann stufenartig reduziert werden, wird bevorzugt jedoch kontinuierlich abgesenkt.

Unter dem Begriff kinematische Kopplung wird im Folgenden verstanden, dass jegliche Änderungen der Arbeitsgeschwindigkeiten zwingend von beiden Behandlungseinheiten durchgeführt werden.

Dadurch, dass zu einem ersten vorgegebenen Zeitpunkt die Zufuhr von Behältnissen unterbrochen wird, wird erreicht, dass die erste Behandlungseinheit nach einer gewissen Zeit leer läuft, das heißt keine Behältnisse mehr behandelt. Sobald im Wesentlichen sämtliche Behältnisse die erste Behandlungseinheit verlassen haben, kann die Arbeitsgeschwindigkeit der gesamten Anlage reduziert werden.

Unter im Wesentlichen alle Behältnisse wird verstanden, dass auch Ausgestaltungen möglich sind, bei denen einzelne Behältnisse noch in der ersten Behandlungseinheit behandelt werden, während bereits die Arbeitsgeschwindigkeit reduziert wird. In diesem Falle sind diese einzelnen Gefäße üblicherweise als Ausschuß zu behandeln, da sie nicht in ordnungsgemäßer Weise behandelt wurden. Falls daher vom Anlagenbetreiber ein gewisser Ausschuss in Kauf genommen wird, so ist es auch möglich, einzelne Behältnisse noch zu behandeln, während bereits die Geschwindigkeit der Anlage reduziert wird. Weiterhin ist in diesem zusammenhang zu berücksichtigen, dass die Behältnisse in vielen Ausführungsformen in vorgegebenen Stückzahlen bzw. in Reihen (im Folgenden auch als Schüsse bezeichnet) zugeführt werden und dabei üblicherweise das erste und das letzte Behältnis dieser Reihe ohnehin nicht ordnungsgemäß geblasen werden, da diese Gefäße beim Durchlaufen der Heizung nur einseitig abgeschattet werden und daher die Prozessparameter in ihrer Gesamtheit (z.B. im Heizofen, für Vorformlinge) für diese Behältnisse nicht korrekt sind.

Die vorliegende Aufgabe wird weiterhin durch ein Verfahren zur Steuerung einer Anlage der oben beschriebenen Art nach Anspruch 2 gelöst. Damit wird erreicht, dass einerseits die vorgegebene Anzahl an Behältnissen mit einer reduzierten Arbeitsgeschwindigkeit befüllt werden kann, wie dies beispielsweise beim Leeren des Speicherkessels der Füllmaschine nötig ist. Gleichzeitig wurden jedoch die Behältnisse mit der Vollarbeitsgeschwindigkeit hergestellt bzw. geblasen.

Auch bei diesem Verfahren kann wiederum ein höherer Ausschuss an Gefäße in Kauf genommen werden und daher ist es auch möglich, dass sich bei reduzierender Geschwindigkeit noch einzelne Gefäße in der ersten Behandlungseinheit befinden oder aber dass andererseits sich vor der Reduzierung der Arbeitsgeschwindigkeit bereits einige wenige Gefäße in der zweiten Behandlungseinheit bzw. der Fülleinheit befinden.

Vorzugsweise werden die Behältnisse zwischen der ersten Behandlungseinheit und der zweiten Behandlungseinheit mit einer Transporteinrichtung transportiert, wobei diese Transporteinrichtung vorzugsweise kinematisch mit den beiden Behandlungseinheiten gekoppelt ist. Damit finden sich zu dem Zeitpunkt, zu dem die Arbeitsgeschwindigkeit der Anlage reduziert wird, im Wesentlichen sämtliche Behältnisse in der Transporteinrichtung, bei der es sich beispielsweise um eine Zwischenkette handeln kann.

Falls nötig, kann das oben beschriebene Verfahren mehrfach durchgeführt werden, das heißt es können mehrmals hintereinander vorgegebene Anzahlen an Behältnissen der ersten Behandlungseinheit zugeführt werden und nachdem diese die Behandlungseinheit verlassen haben, jeweils die Arbeitsgeschwindigkeit der gesamten Anlage reduziert werden. Beispielsweise ist es möglich, derartige (im Folgenden auch als Schüsse) bezeichnete Anzahlen so lange zuzuführen, bis eine Ringkesselfüllung verbraucht ist.

Vorzugsweise ist die erste Behandlungseinheit eine Blasmaschine und besonders bevorzugt ist die zweite Behandlungseinheit eine Flaschenfüllmaschine. Es können hier jedoch auch andere Behältnis-Behandlungsmaschinen vorgesehen sein, wie beispielsweise Etikettiermaschinen, Verschließmaschinen, Inspektionsvorrichtungen für Behältnisse und dergleichen.

Damit werden besonders vorteilhaft die Behältnisse in der ersten Behandlungseinheit stets mit der gleichen Arbeitsgeschwindigkeit behandelt und die Geschwindigkeit der gesamten Anlage nur reduziert, wenn die erste Behandlungseinheit leer läuft.

Ein weiterer möglicher Ansatz bestünde auch darin, die Anzahl der Behältnisse, die der ersten Behandlungseinheit zugeführt werden, zu reduzieren und damit beispielsweise in Transportrichtung den Abstand der Behältnisse zu erhöhen. Aufgrund dieser Vorgehensweise wäre es möglich, die Arbeitsgeschwindigkeit in der ersten Behandlungseinheit beizubehalten und gleichzeitig, da effektiv eine geringere Menge an Behältnissen bei der zweiten Behandlungseinheit ankommt, deren Arbeitsgeschwindigkeit zu reduzieren.

Dabei ist jedoch zu beachten, dass beispielsweise bei Blasmaschinen auch der Abstand der Behältnisse zueinander ein entscheidender Parameter ist, der sich auf den Blasvorgang auswirkt (zumindest im Heizofen).

Vorzugsweise werden die Behältnisse der ersten Behandlungseinheit portionsweise mit vorgegebenen Stückzahlen zugeführt. Damit erfolgt eine Zuführung bei dieser Ausführungsform nicht kontinuierlich sondern in Schüssen mit vorgegebenen Stückzahlen. Es ist jedoch auch möglich, die beiden Varianten zu kombinierten, das heißt im Normalbetrieb die Behältnisse kontinuierlich zuzuführen und beispielsweise im Rahmen eines Leerlaufbetriebs (also eines Leerlaufens der Maschine) die Behältnisse in vorgegebenen Portionen bzw. Schüssen zuzuführen.

In den obigen Ausführungen war bisher immer die Rede davon, die Arbeitsgeschwindigkeit der Anlage zu einem zweiten Zeitpunkt gegenüber der Arbeitsgeschwindigkeit der Anlage zu einem ersten Zeitpunkt zu reduzieren. Unter Reduzierung ist aber eine allgemeine Anpassung zu verstehen, sodass der Schutzumfang auch Lösungen umfasst, bei denen die Arbeitsgeschwindigkeit der Anlage zu einem zweiten Zeitpunkt gegenüber der Arbeitsgeschwindigkeit der Anlage zu einem ersten Zeitpunkt erhöht wird.

Die vorliegende Erfindung ist weiterhin auf eine Anlage zum Behandeln von Behältnissen gerichtet, welche eine erste Behandlungseinheit, welche die Behältnisse in einer ersten vorgegebenen Weise behandelt, aufweist. Weiterhin ist eine zweite Behandlungseinheit vorgesehen, welche die Behältnisse in einer zweiten vorgegebenen und sich von der ersten unterscheidenden Weise behandelt. Dabei sind die erste Behandlungseinheit und die zweite Behandlungseinheit kinematisch starr miteinander gekoppelt. Dabei ist die zweite Behandlungseinheit in einer Transportrichtung der Behältnisse nach der ersten Behandlungseinheit angeordnet.

Erfindungsgemäß weist die Anlage eine Steuerungseinrichtung auf, welche bewirkt, dass zu einem ersten vorgegebenen Zeitpunkt die Zuführung von Behältnissen in die erste Behandlungseinheit unterbrochen wird und zu einem zweiten, bezüglich des ersten Zeitpunkt späteren Zeitpunkt, die Arbeitsgeschwindigkeit der Anlage angepasst, vorzugsweise reduziert, wird, wobei der zweite Zeitpunkt derart gewählt ist, dass zu dem zweiten Zeitpunkt: keine Behältnisse mehr in der ersten Behandlungseinheit behandelt werden, sondern sich im Wesentlichen alle in der Anlage befindlichen Behältnisse in einer Transporteinrichtung befinden.

Vorzugsweise weist die Anlage eine Transporteinrichtung auf, welche die Behältnisse von der ersten Behandlungseinheit zu der zweiten Behandlungseinheit transportiert. Die Transporteinrichtung ist dabei bovorzugt ebenfalls in ihrer Gesamtheit mit den Behandlungseinheiten kinematisch starr gekoppelt.

Alternativ kann die Steuereinrichtung auch bewirken, dass eine vorgegebene Anzahl an Behältnissen der ersten Behandlungseinheit zugeführt wird und die Arbeitsgeschwindigkeit der Anlage reduziert wird, nachdem das letzte Behältnis die erste Behandlungseinheit verlassen hat und bevor das erste Behältnis der vorgegebenen Anzahl die zweite Behandlungseinheit erreicht hat. Damit befinden sich besonders bevorzugt zum Zeitpunkt t2 sämtliche Behältnisse in der Transporteinrichtung.

Unter einer Transporteinrichtung wird jegliche Einrichtung verstanden, die zum Transportieren von Behältnissen geeignet ist, wie insbesondere aber nicht ausschließlich Transportketten, Transportschnecken, Transporträder, Transportbänder, Umlaufsterne und dergleichen. Eine Transporteinrichtung weist vorzugsweise Transportelemente auf, denen Behältnisse fest zugeordnet werden. Transportelemente können vorzugsweise Greifer für Flaschen, vorzugsweise Halsgreifer sein, die an einem Endlosband angebracht sind.

Vorzugsweise weist die Anlage auch eine Zuführeinheit auf, welche die Behältnisse der ersten Behandlungseinheit zuführt. Weiterhin ist bevorzugt eine Detektionseinrichtung vorgesehen, welche in der ersten Behandlungseinheit befindliche Behältnisse erkennt. Damit ist es beispielsweise möglich, den Zeitpunkt t2 in Abhängigkeit von einem Ausgangssignal dieser Detektionseinrichtung zu wählen, beispielsweise durch optische Mittel festzustellen, ob alle Behältnisse die erste Behandlungseinheit verlassen haben, um erst dann die Arbeitsgeschwindigkeit der Anlage zu reduzieren.

Bei einer weiteren vorteilhaften Ausführungsform weist die Anlage eine Portionierungseinrichtung auf, die bewirkt, dass die Behältnisse der ersten Behandlungseinheit wenigstens zeitweise portionsweise zugeführt werden. Diese Portionierungseinrichtung kann beispielsweise ein Schließsystem in der Zuführeinrichtung sein, welches durch gezieltes öffnen und Schließen nur bestimmte Anzahlen an Behältnissen in die erste Behandlungseinheit gelangen lässt. Diese Portionierung ist insbesondere im Rahmen eines Leerlaufbetriebs interessant.

Bei einer weiteren vorteilhaften Ausführungsform bewirkt die Steuereinrichtung, dass die Arbeitsgeschwindigkeit der Anlage angepasst, vorzugsweise reduziert wird, bevor das erste Behältnis einer bestimmten Portion bzw. eines bestimmten Schusses in der zweiten Behandlungseinheit behandelt wird.

Gemäß einer bevorzugten Weiterbildung der Erfindung handelt es sich bei der Anlage um einen Blas-Füll-Block, der also eine Blasmaschine und eine füllmaschine kinematisch fest koppelt, für CSD-Anwendungen, also für Carbonised Soft Drinks wie Limo oder Cola. Besonders hier kommt nämlich das Problem vor, dass bei einem Produktwechsel eine Schaumbildung beim Abfüllen des ersten Ringkessels in die Behältnisse auftritt. Weitere vorteilhafte Ausführungsformen ergeben sich aus den beigefügten Zeichnungen:

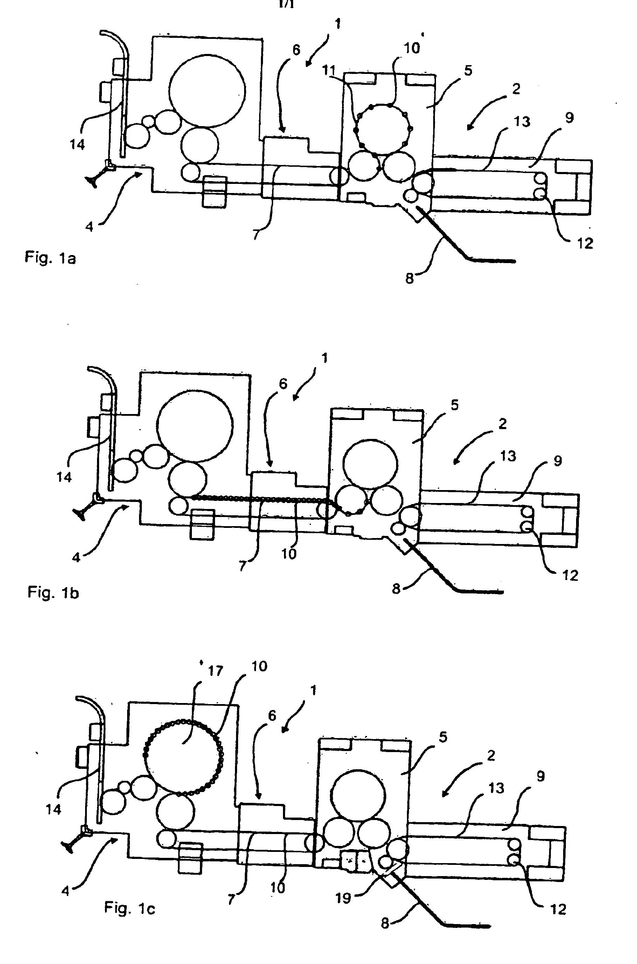

- Fig. 1a: eine erfindungsgemäße Anlage in einem ersten Betriebszustand:
- Fig. 1b: die Anlage aus Fig. 1a in einem zweiten Betriebszustand; und
- Fig. 1c: die Anlage aus Fig. 1a in einem dritten Betriebszustand.

Fig. 1 zeigt eine erfindungsgenäße Anlage 1 in einem ersten Betriebszustand, in dem die gesamte Anlage 1 mit hohler Geschwindigkeit bzw. der regulären Arbeitsgeschwindigkeit betrieben wird. Dabei ist die Situation gezeigt, in der eine Vielzahl von Behältnissen 10 gerade in der ersten Behandlungseinheit 2, bei es sich um eine Blasmaschine handelt, angeordnet sind bzw. diese durchlaufen. Dabei werden die Behältnisse zunächst mit einer Transporteinrichtung 13 durch einen Ofen 9 geführt und in diesem erwärmt. Das Bezugszeichen 12 bezieht sich auf eine Umlenkrolle für das Transportband bzw. die Transportkette 13. Die Behältnisse 10 werden der Anlage 1 über eine Zuführeinrichtung 8 zugeführt.

Nach einer genau definierten Erwärmung, wobei die Parameter, wie die Arbeitsgeschwindigkeit, für diesen Erwärmungsvorgang genau festgelegt sind, werden die Behältnisse 10 in der eigentlichen Blaseinrichtung 5, die ebenfalls Bestandteil der ersten Behandlungseinheit 2 ist, geblasen und auf ihre Sollgröße gebracht. Das Bezugszeichen 11 bezieht sich dabei auf das Blasrad, das eine Vielzahl von Behältnissen 10 transportiert.

An die erste Behandlungseinheit 2 schließt sich eine Transporteinrichtung 6 an, die eine Transportkette 7 aufweist. Auch diese Transporteinrichtung 6 ist bevorzugt kinematisch starr mit den beiden Behandlungseinheiten 2 und 4 gekoppelt. Bei der zweiten Behandlungseinheit 4 handelt es sich um eine Füllmaschine, welche die bereits geformten Behältnisse 10 nit Ihrem Inhalt befülls. Das Bezugszeichen 14 bezieht sich auf einen Auslauf zum Abtransportieren der bereits gefüllten Behältnisse 10. In Figur 1 ist daher ein Betriebszustand nach dem Zeitpunkt t1 gezeigt, d. h. hier wurde die zufuhr an Behältnissen 10 aus Zuführeinrichtung 8 in den Ofen 9 bereits gestoppt.

Fig. 1b bezieht sich auf einen weiteren Betriebszustand der Anlage zum Zeitpunkt t2. Hier haben bereits sämtliche Behältnisse 10 die erste Behandlungseinheit 2 verlassen bzw. der eigentliche Behandlungsschritt, das heißt das Streckblasen der Behältnisse 10 ist abgeschlossen.

Grundsätzlich wäre es auch denkbar, nit der Reduzierung der Arbeitsgeschwindigkeit zu beginnen, wenn gerade noch das letzte Behältnis 10 eines Schusses geblasen wird. Üblicherweise werden die ersten und letzten Behältnisse 1C eines Schusses nicht ordnungsgemäß geblasen, da sie, wie oben erwähnt, keinen vorderen bzw. hinteren Nachbarn haben und daher die Parameter für diese endseitigen Behältnisse nicht korrekt gewählt sind. Ausgehend von dem in Fig. 1b gezeigten Zeitpunkt wird nunmehr die Arbeitsgeschwindigkeit der Anlagen 1 reduziert und die Behältnisse 10 werden, wie in Fig. 1c gezeigt, der zweiten Behandlungseinheit 4 zugeführt.

Diese zweite Behandlungseinheit 4 weist eine Umlaufeinrichtung 17 auf, in der die Behältnisse 10 zur Befüllung transportiert werden. Nunmehr kann dieses auffüllen mit niedrigerer Arbeitsgeschwindigkeit der Vorrichtung erfolgen und damit kann Schaumbildung verhindert werden. Gleichzeitig wirkt sich diese niedriger Arbeitsgeschwindigkeit nicht auf die erste Behandlungseinheit 2 bzw. deren Prozeß aus, da sich zu diesem Zeitpunkt keine Behältnisse 10 mehr in der ersten Behandlungseinheit 2 befinden. Das Bezugszeichen 19 veranschaulicht - grob aschematisch - einen Schließmechanismus, der verhindert, dass Behältnisse 10 während des geschwindigkeitsreduzierten Betriebs in die erste Behandlungseinheit 2 gelangen. Damit werden, wie oben ausgeführt, während des Betriebs mit reduzierter Geschwindigkeit der Anlage 1 bzw. der ersten Behandlungseinheit 2 keine Behältnisse 10 zugeführt.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Verfahren zur Steuerung einer Anlage (1) zum Behandeln von Behältnissen (10) mit einer ersten Behandlungseinheit (2), welche die Behältnisse (10) in einer ersten vorgegebenen weise behandelt, einer zweiten Behandlungseinheit (4) welche die Behältnisse (10) in einer zweiten vorgegebenen und sich von der ersten Weise unterscheidenden weise behandelt, wobei die erste Behandlungseinheit (2) und die zweite Behandlungseinheit (4) kinematisch starr miteinander gekoppelt sind, und wobei die zweite Behandlungseinheit (4) in einer Transportrichtung der Behältnisse (10) nach der ersten Behandlungseinheit (2) angeordnet ist, **dadurch gekennzeichnet, dass** zu einem ersten vorgegebenen Zeitpunkt (t1) die Zufuhr von Behältnissen (10) in die erste Behandlungseinheit unterbrochen wird und zu einem zweiten, gegenüber dem ersten Zeitpunkt späteren Zeitpunkt (t2) die Arbeitsgeschwindigkeit der Behandlungseinheiten (2, 4) reduziert wird, wobei die Arbeitsgeschwindigkeit erst reduziert wird, nachdem im Wesentlichen alle in der ersten Behandlungseinheit (2) befindlichen Behältnisse (10) von dieser behandelt wurden, wobei die Behältnisse (10) zwischen der ersten Behandlungseinheit (2) und der zweiten Behandlungseinheit (4) mit einer Transporteinrichtung (6) transportiert werden und diese Transporteinrichtung (6) kinematisch mit den beiden Behandlungseinheiten (2,4) gekoppelt ist und wobei zu dem zweiten Zeitpunkt (t2) sich im Wesentlichen alle in der Anlage (1) befindlichen Behältnisse (10) in der
Transporteinrichtung (6) befinden.

2. verfahren zur Steuerung einer Anlage (1) zum Behandeln von Behältnissen (10) mit einer ersten Behandlungseinheit (2), welche die Behältnisse (10) in einer ersten vorgegebenen Weise behandelt, einer zweiten Behandlungseinheit (4) welche die Behältnisse (10) in einer zweiten vorgegebenen und sich von der ersten Weise unterscheidenden Weise behandelt, wobei die erste Behandlungseinheit (2) und die zweite Behandlungseinheit (4) kinematisch starr miteinander gekoppelt sind, und wobei die zweite Behandlungseinheit (4) in einer Transportrichtung der Behältnisse (10) nach der ersten Behandlungseinheit angeordnet ist, **dadurch gekennzeichnet, dass** eine vorgegebene Anzahl an Behältnissen (10) der ersten Behandlungseinheit (2) zugeführt wird und die Arbeitsgeschwindigkeit der Anlage (1) reduziert wird, nachdem das letzte Behältnis (10) dieser Anzahl die erste Behandlungseinheit (2) verlassen hat und bevor das erste Behältnis (10) der vorgegebenen Anzahl die zweite Behandlungseinheit (4) erreicht hat.

3. Verfahren nach wenigstens einem der vorangegangenen Ansprüche, **dadurch gekennzeichnet, dass** die erste Behandlungseinheit (2) eine Blasmaschine ist.

4. Verfahren nach wenigstens einem der vorangegangenen Ansprüche, **dadurch gekennzeichnet, dass** die Behältnisse (10) der ersten Behandlungseinheit (2) portionsweise mit vorgegebenen Stückzahlen zugeführt werden.

5. Anlage (1) zum Behandeln von Behältnissen (10), mit einer ersten Behandlungseinheit (2), welche die Behältnisse (10) in einer ersten vorgegebenen Weise behandelt, einer zweiten Behandlungseinheit (4) welche die Behältnisse (10) in einer zweiten vorgegebenen und sich von der ersten Weise unterscheidenden Weise behandelt, wobei die erste Behandlungseinheit (2) und die zweite Behandlungseinheit (4) kinematisch starr miteinander gekoppelt sind, und wobei die zweite Behandlungseinheit (4) in einer Transportrichtung der Behältnisse (10) nach der ersten Behandlungseinheit (2) angeordnet ist, **dadurch gekennzeichnet, dass** die Anlage (1) eine Steuerungseinrichtung aufweist, welche bewirkt, dass zu einem ersten vorgegebenen Zeitpunkt (t1) die Zuführung von Behältnissen (10) in die erste Behandlungseinheit (2) unterbrochen wird und zu einem zweiten, bezüglich des ersten Zeitpunkt späteren Zeitpunkt (t2) die Arbeitsgeschwindigkeit der Anlage (1) reduziert wird, wobei der zweite Zeitpunkt (t2) bezüglich des ersten Zeitpunkts (t1) derart gewählt ist, dass zu dem zweiten Zeitpunkt (t2) im Wesentlichen keine Behältnisse (10) mehr in der ersten Behandlungseinheit (2) behandelt werden, sondern sich im Wesentlichen alle in der Anlage (1) befindlichen Behältnisse (10) in einer in der Transportrichtung der Behältnisse (10) zwischen der ersten Behandlungseinheit (2) und der zweiten Behandlungseinheit (4) angeordneten Transporteinrichtung (6) befinden.

6. Anlage (1) nach Anspruch 5, **dadurch gekennzeichnet, dass** eine Detektionseinrichtung vorgesehen ist, welche in der ersten Behandlungseinheit (2) befindliche Behältnisse (10) erkennt.

7. Anlage (1) nach wenigstens einem der vorangegangenen Ansprüche 5 - 6, **dadurch gekennzeichnet, dass** die Anlage (1) eine Portionierungseinrichtung aufweist, die bewirkt, dass die Behältnisse (10) der ersten Behandlungseinheit (2) wenigstens zeitweise portionsweise zugeführt werden.

8. Anlage (1) nach wenigstens einem der Ansprüche 5 bis 7, **dadurch gekennzeichnet, dass** die Transporteinrichtung (6) mit Transportmitteln ausgestattet ist.

9. Anlage (1) nach Anspruch 5, **dadurch gekennzeichnet, dass** jedem Behältnis (10) ein Transportmittel fest zugeordnet ist.

10. Anlage (1) nach wenigstens einem der Ansprüche 8 bis 9, **dadurch gekennzeichnet, dass** die Transportmittel im Bereich der Transporteinrichtung (6) eine definierte Teilung aufweisen.

11. Anlage (1) nach wenigstens einem der Ansprüche 8 bis 10, **dadurch gekennzeichnet, dass** die Transportmittel durch Greifer, insbesondere Halsgreifer gebildet werden.

12. Anlage (1) nach wenigstens einem der Ansprüche 5 bis 11, **dadurch gekennzeichnet, dass** die erste Behandlungseinheit (2) eine Stxeckblasmaschine (5) umfasst und / oder die zweite Behandlungseinheit (4) eine Füllmaschine umfasst.

## Claims

1. A method of controlling a system (1) for processing containers (10) including a first processing unit (2), in which the containers (10) are processed in a first specified manner, a second processing unit (4), in which the containers (10) are processed in a second specified manner which is different from the first manner, with the first processing unit (2) and the second processing unit (4) being kinematically rigidly coupled to one another, and with the second processing unit (4) being located downstream of the first processing unit (2) in the transport direction of the containers (10), wherein the supply of containers (10) into the first processing unit is interrupted at a first specified point in time (t1) and the working speed of the processing units (2, 4) is reduced at a second point in time (t2) which is later than the first point in time, with the working speed not being reduced until after essentially all of the containers (10) in the first processing unit (2) have been processed thereby wherein the containers (10) are conveyed between the first processing unit (2) and the second processing unit (4) by means of a conveying device (6) said conveying device (6) being kinematically coupled to the two processing units (2, 4) and wherein essentially all of the containers (10) located in the system (1) are in the conveying device (6) by the second point in time (t2).

2. A method of controlling a system (1) for processing containers (10) including a first processing unit (2), in which the containers (10) are processed in a first specified manner, a second processing unit (4), in which the containers (10) are processed in a second specified manner which is different from the first manner, with the first processing unit (2) and the second processing unit (4) being kinematically rigidly coupled to one another, and with the second processing unit (4) being located downstream of the first processing unit (2) in the transport direction of the containers (10), wherein a specified number of containers (10) is supplied to the first processing unit (2) and the working speed of the system (1) is reduced after the last container (10) of this number has left the first processing unit (2) and before the first container (10) of the specified number has reached the second processing unit (4).

3. The method as claimed in claim 1 or 2, wherein the first processing unit (2) is a blowing machine.

4. The method as claimed in claim 1 or 2, wherein the containers (10) are supplied to the first processing unit (2) in batches of specified numbers.

5. A system (1) for processing containers (10), including a first processing unit (2) in which the containers (10) are processed in a first specified manner, a second processing unit (4) in which the containers (10) are processed in a second specified manner which is different from the first manner, with the first processing unit (2) and the second processing unit (4) being kinematically rigidly coupled to one another, and with the second processing unit (4) being located downstream of the first processing unit (2) in the transport direction of the containers (10), wherein the system (1) includes a control device causing the supply of containers (10) into the first processing unit (2) to be interrupted at a first specified point in time (t1) and the working speed of the system (1) to be reduced at a second point in time (t2) which is later than the first point in time, with the second point in time (t2) being selected such in relation to the first point in time (t1) that essentially no more containers (10) will be processed in the first processing unit (2) by the second point in time (t2) but essentially all containers present in the System are in a conveying device (6) said conveying device (6) being arranged between the first processing unit (2) and the second processing unit (4).

6. The system (1) as claimed in claim 5, wherein a detection device is provided which detects any containers (10) present in the first processing unit (2).

7. The system (1) as claimed in at least one of the preceding claims 5 - 6, wherein the system (1) includes a batching device causing the containers (10) to be supplied at least at times in batches to the first processing unit (2).

8. The system (1) as claimed in at least one of claims -5 - 7, wherein the conveying device (6) is equipped with conveying means.

9. The system (1) as claimed in claim 5, wherein each container (10) has conveying means firmly allocated thereto.

10. The system (1) as claimed in at least one of claims 8 to 9, wherein the conveying means have a defined pitch in the area of the conveyor device (6).

11. The system (1) as claimed in at least one of claims 8 to 10, wherein the conveying means are formed by grippers, in particular neck grippers.

12. The system (1) as claimed in at least one of claims 5 to 11, wherein the first processing unit (2) comprises a stretch blow-moulding machine (5) and / or the second processing unit (4) comprises a filling machine.

## Revendications

1. Procédé de commande d'une installation (1) de traitement de récipients (10) comportant une première unité de traitement (2), laquelle traite les récipients (10) d'une première manière prescrite, une deuxième unité de traitement (4), laquelle traite les récipients (10) d'une deuxième manière prescrite qui se distingue de la première manière, la première unité de traitement (2) et la deuxième unité de traitement (4) étant accouplées l'une à l'autre de manière cinématiquement fixe, et la deuxième unité de traitement (4) étant disposée en aval de la première unité de traitement (2) dans une direction de transport des récipients (10), **caractérisé en ce qu'**à un premier moment défini (t1), l'amenée de récipients (10) vers la première unité de traitement est interrompue, et **en ce qu'**à un deuxième moment (t2), ultérieur au premier moment, la vitesse de travail des unités de traitement (2, 4) est réduite, ladite vitesse de travail n'étant réduite qu'après traitement par la première unité de traitement (2) de pratiquement tous les récipients (10) se trouvant dans celle-ci, les récipients (10) étant transportés par un dispositif de transport (6) entre la première unité de traitement (2) et la deuxième unité de traitement (4), ledit dispositif de transport (6) étant cinématiquement accouplé aux deux unités de traitement (2, 4), et pratiquement tous les récipients (10) présents dans l'installation (1) au deuxième moment (t2) se trouvant dans le dispositif de transport (6).

2. Procédé de commande d'une installation (1) de traitement de récipients (10) comportant une première unité de traitement (2), laquelle traite les récipients (10) d'une première manière prescrite, une deuxième unité de traitement (4), laquelle traite les récipients (10) d'une deuxième manière prescrite qui se distingue de la première manière, la première unité de traitement (2) et la deuxième unité de traitement (4) étant accouplées l'une à l'autre de manière cinématiquement fixe, et la deuxième unité de traitement (4) étant disposée en aval de la première unité de traitement (2) dans une direction de transport des récipients (10), **caractérisé en ce qu'**un nombre défini de récipients (10) est amené à la première unité de traitement (2) et **en ce que** la vitesse de travail de l'installation (1) est réduite après que le dernier récipient (10) de ce nombre a quitté la première unité de traitement (2) et avant que le premier récipient (10) du nombre défini n'atteigne la deuxième unité de traitement (4).

3. Procédé selon au moins une des revendications précédentes, **caractérisé en ce que** la première unité de traitement (2) est une souffleuse.

4. Procédé selon au moins une des revendications précédentes, **caractérisé en ce que** les récipients (10) sont amenés par fractions à la première unité de traitement (2), avec des nombres d'unités prescrits.

5. Installation (1) pour le traitement de récipients (10), comportant une première unité de traitement (2), laquelle traite les récipients (10) d'une première manière prescrite, une deuxième unité de traitement (4), laquelle traite les récipients (10) d'une deuxième manière prescrite qui se distingue de la première manière, la première unité de traitement (2) et la deuxième unité de traitement (4) étant accouplées l'une à l'autre de manière cinématiquement fixe, et la deuxième unité de traitement (4) étant disposée en aval de la première unité de traitement (2) dans une direction de transport des récipients (10), caractérisée en en ce que ladite installation (1) est pourvue d'un dispositif de commande qui provoque l'interruption de l'amenée de récipients (10) vers la première unité de traitement (2) à un premier moment défini (t1), et la réduction de la vitesse de travail de l'installation (1) à un deuxième moment (t2) ultérieur au premier moment, le deuxième moment (t2) étant sélectionné par rapport au premier moment (t1) de telle manière qu'au deuxième moment (t2), pratiquement aucun récipient (10) ne soit plus traité dans la première unité de traitement (2), mais que pratiquement tous les récipients (10) présents dans l'installation (1) se trouvent dans un dispositif de transport (6) disposé entre la première unité de traitement (2) et la deuxième unité de traitement (4) dans la direction de transport des récipients (10).

6. Installation (1) selon la revendication 5, **caractérisée en ce qu'**un dispositif de détection est prévu, lequel détecte les récipients (10) se trouvant dans la première unité de traitement (2).

7. Installation (1) selon au moins une des revendications 5 et 6, **caractérisée en ce que** l'installation (1) est pourvue d'un dispositif de fractionnement qui provoque l'amenée au moins temporairement fractionnée des récipients (10) de la première unité de traitement (2).

8. Installation (1) selon au moins une des revendications 5 à 7, **caractérisée en ce que** le dispositif de transport (6) est équipé de moyens de transport.

9. Installation (1) selon la revendication 5, **caractérisée en ce qu'**un moyen de transport est fixement attribué à chaque récipient (10).

10. Installation (1) selon au moins une des revendications 8 à 9, **caractérisée en ce que** les moyens de transport présentent une distribution définie au niveau du dispositif de transport (6).

11. Installation (1) selon au moins une des revendications 8 à 10, **caractérisée en ce que** les moyens de transport sont formés par des préhenseurs, en particulier des préhenseurs de col.

12. Installation (1) selon au moins une des revendications 5 à 11, **caractérisée en ce que** la première unité de traitement (2) comprend une étireuse-souffleuse (5) et / ou la deuxième unité de traitement (4) une embouteilleuse.
